# EUROPEAN PATENT SPECIFICATION

(11) **EP 1 596 133 B1**
(45) Date of publication and mention of the grant of the patent: **19.10.2011**
(21) Application number: 05252833.8
(22) Date of filing: 09.05.2005
(51) Int. Cl.: F23R 3/28, F23C 5/32, F23R 3/34

(54) **Fuel injector apparatus and method of operating the same**
Brennstoffeinspritzvorrichtung und Verfahren zu deren Betreiben
Appareil d'injection de carburant et méthode de fonctionnement d'un tel appareil

(30) Priority: 11.05.2004 US 843908
(43) Date of publication of application: 16.11.2005
(73) Proprietor: United Technologies Corporation, Hartford, CT 06101 (US)
(72) Inventor: Chen, Alexander G., Ellington, CT 06029 (US); Cohen, Jeffrey M., Hebron, CT 06248 (US)
(74) Representative: Leckey, David Herbert

(56) References cited:
- EP-A- 1 489 358
- WO-A-03/058123
- US-A- 5 983 643
- US-A1- 2004 060 301
- US-B1- 6 360 525

## Description

### BACKGROUND OF THE INVENTION

The invention relates to fuel injectors. More particularly, the invention relates to multi-point fuel/air injectors for gas turbine engines.

A well-developed field exists in combustion technology for gas turbine engines. U.S. Patent Application Ser No. 10/260,311 (the'311 application) filed September 27, 2002 and published as US Patent Application US2004/0060301 discloses structure and operational parameters of an exemplary multi-point fuel/air injector for a gas turbine engine. The exemplary injectors of the '311 application include groups of fuel/air nozzles for which the fuel/air ratio of each nozzle group may be separately controlled. Such control may be used to provide desired combustion parameters.

Nevertheless, there remains opportunities for improvement in fuel injector construction.

EP-A-1489358, which is prior art under Art. 54(3) EPC discloses a fuel injector having a plurality of rings of nozzle, which nozzles direct fuel at an angle to the injector axis.

### SUMMARY OF THE INVENTION

One aspect of the invention involves a fuel injector apparatus according to claim 1.

In various implementations, a first group of the one or more groups may include every nozzle of at least a first of the rings. A first group of the one or more groups may include every nozzle of at least an outermost of the rings. A first group of the one or more groups may include every nozzle of at least a first and a second of the rings. The nozzles of the first and second rings may be oriented to direct their associated jets with an angular component of like sign about the injector axis. The one or more groups may include a first, a second, and a third of the rings. The apparatus may be used with a gas turbine engine combustor.

The nozzles may be formed in a common injector body.

The details of one or more embodiments of the invention are set forth in the accompanying drawings and the description below, Other features and advantages of the invention will be apparent from the description and drawings, and from the claims.

### BRIEF DESCRIPTION OF THE DRAWINGS

FIG. 1 is a partially schematic sectional view of a gas turbine engine combustor.
FIG. 2 is a forward-looking view of an aft/downstream end of an injector of the combustor of FIG. 1.
FIG. 3 is a partial sectional view of a nozzle of the injector of FIG. 2 taken along line 3-3.
FIG. 4 is a partial sectional view of a second nozzle of the injector of FIG. 2 taken along line 4-4.
FIG. 5 is a partial sectional view of a third nozzle of the injector of FIG. 2 taken along line 5-5.
FIG. 6 is a partial sectional view of a fourth nozzle of the injector of FIG. 2 taken along line 6-6.
FIG. 7 is a partial sectional view of a fifth nozzle of the injector of FIG. 2 taken along line 7-7.

Like reference numbers and designations in the various drawings indicate like elements.

### DETAILED DESCRIPTION

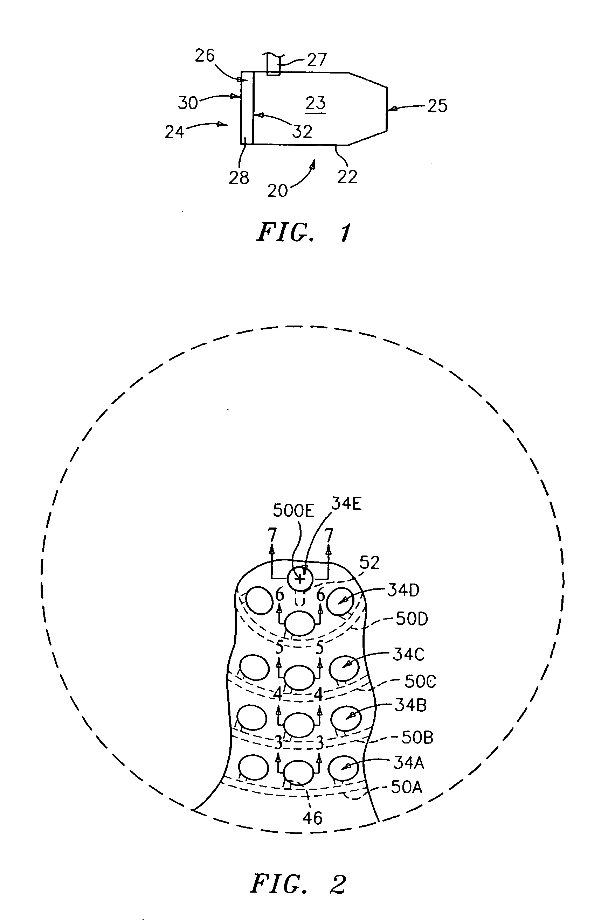

FIG. 1 shows a combustor 20 for a gas turbine engine (e.g., an industrial gas turbine engine used for electrical power generation). The combustor has a wall structure 22 surrounding an interior 23 extending from an upstream inlet 24 receiving air from a compressor section of the engine to a downstream outlet 25 discharging combustion gases to the turbine section. Near the inlet, the combustor includes an injector 26 for introducing fuel to the air received from the compressor to introduce a fuel/air mixture to the combustor interior. An ignitor 27 is positioned to ignite the fuel/air mixture.

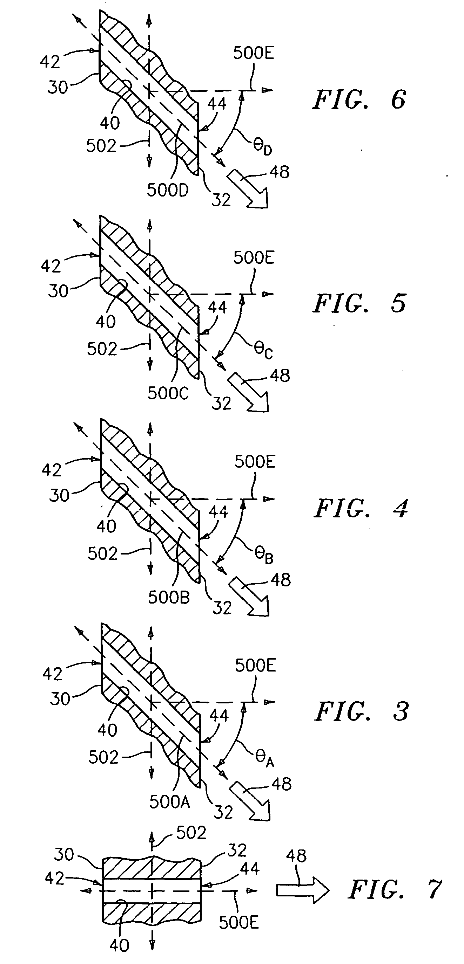

The injector 26 includes a body 28 extending from an upstream end 30 to a downstream end 32 with a number of passageways therebetween forming associated fuel/air nozzles. FIG. 2 shows passageways 34A-34D arrayed in concentric rings about a single central passageway 34E. The exemplary central passageway has a central axis 500E coincident with a central axis of the body 28. The passageways of at least one of the other rings have central axes off-parallel to the axis 500E. FIGS. 3-6 show the passageways/nozzles 34A-D having respective axes 500A-D skew and off-parallel to the axis 500E (FIGS. 2 and 7) by angles θ_{A}-θ_{D}. Each of the passageways is bounded by a surface 40 extending from an upstream air inlet 42 to a downstream fuel/air outlet 44. A fuel inlet port 46 (FIG. 2) is formed in the surface 40 for introducing fuel to the air flowing from the passageway inlet. An associated mixed fuel/air jet 48 is thus expelled from each nozzle along the associated nozzle axis.

One or more groups of the nozzles are at least partially independently fueled, giving an operator the ability to at least partially vary relative fuel/air ratios of the jets of the groups. In an exemplary embodiment, the nozzles of each ring are commonly fueled independently of the nozzles of the other rings and the central nozzle. For example, the nozzles of each of the rings of nozzles may be fed from an associated fuel plenum 5OA-D (FIG. 2) itself fed by an associated fuel line (not shown) with the central nozzle directly fed by another fuel line 52. Each of the lines may have its own independent fuel pump (not shown), pressure regulating valve (not shown), and/or flow control valve (not shown) to controllably govern flow from a fuel source (e.g., a tank - not shown).

The nozzle positioning, size or combination of sizes, and orientations (e.g., angles θ_{A}-θ_{D}) may be chosen to achieve desired flow properties at one or more desired operating conditions. The angles may be of the same sign or of opposite sign (e.g., to create a counter-swirl effect). The angles may be of like magnitude or different magnitude. Exemplary angle magnitudes are ≤ 60°, more narrowly, 10°-50°, and, most particularly, 20°-45°. In addition to different orientations, the nozzles of each ring (or other grouping) may have different cross-sectional areas, shapes (e.g., beyond the illustrated circular section), or other dimensional parameters, Various layouts/positioning may be used, including non-circular rings or nozzle groups, layouts without a single central nozzle or with a cluster of central nozzles, and the like. In various operational stages, the nozzles of each group may be fueled differently (e.g., as shown in the'311 application) or even the nozzles within a given group may be fueled differently (e.g., shutting fuel flow off to some while maintaining fuel flow to others to further lean the net reaction associated with that group).

The orientation and geometry of the nozzles of each group may be optimized in view of available fuel/air ratios to provide advantageous performance at one or more operating conditions. An exemplary iterative optimization process may be performed in a reengineering of an existing injector. The nozzle orientations and geometries may be iteratively varied. For each iteration, the combination of fuel/air ratios may be varied to establish associated operating conditions. Performance parameters may be measured at those operating conditions (e.g., efficiency, emissions, and stability), The structure and operational parameters associated with desired performance may be noted, with the structure being selected as the reengineered injector configuration and the operational parameters potentially being utilized to configure a control system. Optimization may use a figure of merit that includes appropriately weighted emissions parameters (e.g., of NOₓ, CO, and unburned hydrocarbons (UHC)) and other performance characteristics (e.g., pressure fluctuation levels), resulting in an optimized configuration that gives the best (or at least an acceptable) combined performance based on these metrics. The degrees of freedom can be restricted to the fuel staging scheme (i.e., how much fuel flows through each of the rings given a fixed total fuel flow) or can be extended to include the swirl angles of each of the rings or the relative air flow rates associated with each of the rings, based on their relative flow capacities. The former is a technique that can be used after the injector is built and can be used to tune the combustor to its best operating point. The latter technique is appropriately used before the final device is built.

Fueling may be used to create zones of different temperature. Relatively cool zones (e.g., by flame temperature) are associated with off-stoichiometric fuel/air mixtures. Relatively hot zones will be closer to stoichiometric. Cooler zones tend to lack stability. Locating a hotter zone adjacent to a cooler zone may stabilize the cooler zone. In an exemplary operation, different fuel/air ratios for the different nozzle rings may create an exemplary three annular combustion zones downstream of the injector: lean, yet relatively hot, outboard and inboard zones; and a leaner and cooler intermediate zone. The outboard and inboard zones provide stability, while the intermediate zone reduces total fuel flow in a low power setting (or range). As NOₓ generation is associated with high temperature, the low temperatures of the intermediate zone will have relatively low NOₓ. By having an overall lean chemistry and good stability, desired advantageously low levels of UHC and CO may be achieved. Increasing/decreasing the equivalence ratio of the intermediate zone may serve to increase/decrease engine power while maintaining desired stability and low emissions.

For such an exemplary three-zone operation, there may be at least three passageways operated at different fuel/air ratios. With more than three independently- fueled nozzle rings (counting a central nozzle, if any), different fuel/air mixtu res may facilitate altering the spatial distribution of the three zones or may facilitate yet more complex distributions (e.g., a lean trough within an intermediate rich zone to create more of a five-zone system). Two-zone operation is also possible.

Whereas the foregoing example has an overall lean chemistry exiting the nozzle, other implementations may have overall rich chemistries. A so-called rich-quench-lean operation introduces additional air downstream to produce lean combustion. Such operation may have an intermediate zone exiting the nozzle that is well above stoichiometric and thus also cool. The inboard and outboard zones may be closer to stoichiometric (whether lean or rich) and thus hotter and more stable to stabilize the intermediate zone. As NOₓ generation is associated with high temperature, the low temperatures of the intermediate zone (through which the majority of fuel may flow) will have relatively low NOₓ. The inboard, and outboard zones may represent a lesser portion of the total fuel (and/or air) flow and thus the increase (if any) of NOₓ (relative to a uniform distribution of the same total amounts of fuel and air) in these zones may be offset. Yet other combinations of hot and cold zones and their absolute and relative fuel/air ratios may be used at least transiently for different combustor configurations and operating conditions.

With an exemplary combustion of methane fuel in air at 1.0 atm pressure, the flame may otherwise become unstable at equivalence ratios of about equal to or greater than 1.6 for rich and about equal to or less than 0.5 for lean. The cooler zone(s) could be run in these ranges (e.g., more narrowly, 0.1-0.5 or 1.6-5.0). The hotter zone(s) could be run between ).5 and 1.6 (e.g., more narrowly 0.5-0.8 or 1.3-1.6, or, yet more narrowly, 0.5 -0.6 or 1.5-1.6; staying away from stoichiometric to avoid high flame temperature and, therefore, reduce NOₓ formation). Other fuels and pressures could be associated with other ranges.

One or more embodiments of the present invention have been described. Nevertheless, it will be understood that various modifications may be made without departing from the scope of the invention. For example, when implemented as a redesign/reengineering of an existing injector, details of the existing injector or of the associated combustor may influence details of the particular implementation. More complex structure and additional elements may be provided. In addition to macroscopic swirl provided by the angled nozzles, additional swirl may be imparted to individual jets (e.g., as disclosed in the '311 application). While illustrated with regard to a can-type combustor, other combustor configurations, including annular combustors, may also be possible. Accordingly, other embodiments are within the scope of the following claims.

## Claims

1. A fuel injector apparatus (26) comprising:
a plurality of rings of nozzles (34A...D), the rings being coaxial with an injector axis (500E), each nozzle defining a gas flow path having an outlet (44) for discharging a fuel/air mixture jet (48); and
means (46) for introducing fuel to air to form said fuel/air mixture,
wherein one or more groups of the nozzles are oriented to direct the associated jets skew to the injector axis, and **charaterised in that** the means is operable to provide at least partially independent control of fuel delivery to a first group of the one or more groups relative to others of the nozzles.

2. The apparatus of claim 1 wherein:
a first group of the one or more groups includes every nozzle of at least a first of said rings.

3. The apparatus of claim 1 wherein:
a first group of the one or more groups includes every nozzle (34A) of at least an outermost of said rings.

4. The apparatus of claim 1, 2 or 3 wherein:
a first goup of the one or more groups includes every nozzle (34) of at least a first and a second of said rings, said nozzles of said first and second rings being oriented to direct their associated jets with an angular component of like sign about the injector axis,

5. The apparatus of any preceding claim wherein the one or more groups include a first, a second, and a third of the rings.

6. The apparatus of any preceding claim used with a gas turbine engine combustor (20).

7. The apparatus of any of claims 1 to 6 wherein:
the nozzles are formed in a common injector body (28).

8. A method of operating the apparatus of any of claims 1 to 7 wherein:
the nozzles of a first of said groups are operated at a first fuel/air ratio;
the nozzles of a second of said groups, substantially outboard of the first group are fueled at a second fuel/air ratio, greater than the first fuel/air ratio; and
the nozzles of a third of said groups, substantially outboard of the second group are fueled at a third fuel/air ratio, less than the second fuel/air ratio.

9. The method of claim 8 wherein said operation provides:
a first combustion zone;
a second combustion zone inboard of the first and leaner than the first; and
a third combustion zone inboard of the second and richer than the second.

10. The method of claim 9 wherein the first, second, and third combustion zones are below stoichiometric,

## Patentansprüche

1. Kraftstoffeinspritzvorrichtung (26) umfassend:
eine Vielzahl von Düsenringen (34A ...D), wobei die Ringe koaxial zu einer Einspritzachse (500E) liegen, wobei jede Düse einen Gasflussweg, der einen Auslass (44) zum Ausspeisen eines Kraftstoff/Luft-Gemischstrahls (48) besitzt, festlegt; und
Mittel (46) zum Einleiten von Kraftstoff in Luft, um das Kraftstoff/LuftGemisch zu bilden,
wobei eine oder mehrere Gruppen der Düsen ausgerichtet sind, um die zugeordneten Strahlen schräg zu der Einspritzachse zu richten, und
**dadurch gekennzeichnet, dass** die Mittel betreibbar sind, um wenigstens teilweise eine unabhängige Steuerung/Regelung einer Kraftstofflieferung an eine erste Gruppe der einen oder mehreren Gruppen relativ zu anderen der Düsen bereitzustellen.

2. Vorrichtung gemäß Anspruch 1, wobei:
eine erste Gruppe der einen Gruppe oder mehreren Gruppen jede Düse von wenigstens einem ersten der Ringe enthält.

3. Vorrichtung gemäß Anspruch 1, wobei:
eine erste Gruppe der einen Gruppe oder mehreren Gruppen jede Düse (34A) von wenigstens einem äußersten der Ringe enthält.

4. Vorrichtung gemäß Anspruch 1, 2 oder 3, wobei:
eine erste Gruppe der einen Gruppe oder mehreren Gruppen jede Düse (34) von wenigstens einem ersten und einem zweiten der Ringe enthält, wobei die Düsen dieses ersten und zweiten Rings ausgerichtet sind, um die zugeordneten Strahlen mit einer Winkelkomponente gleichen Vorzeichens um die Einspritzachse zu richten.

5. Vorrichtung gemäß einem vorhergehenden Anspruch, wobei die eine Gruppe oder mehreren Gruppen einen ersten, einen zweiten und einen dritten der Ringe enthalten.

6. Vorrichtung gemäß einem vorhergehenden Anspruch, die mit einer Gasturbinenmaschinenbrennkammer (20) verwendet wird.

7. Vorrichtung gemäß einem der Ansprüche 1 bis 6, wobei:
die Düsen in einem gemeinsamen Einspritzkörper (28) gebildet sind.

8. Verfahren zum Betreiben der Vorrichtung gemäß einem der Ansprüche 1 bis 7, wobei:
die Düsen einer ersten der Gruppen mit einem ersten Kraftstoff/LuftVerhältnis betrieben werden;
die Düsen einer zweiten der Gruppen, die im Wesentlichen außen zur ersten Gruppe liegt, mit einem zweiten Kraftstoff/Luft-Verhältnis betrieben werden, welches größer als das erste Kraftstoff/Luft-Verhältnis ist; und
die Düsen einer dritten der Gruppen, die im Wesentlichen außen zur zweiten Gruppe liegt, mit einem dritten Kraftstoff/Luft-Verhältnis betrieben wird, das kleiner als das zweite Kraftstoff/Luft-Verhältnis ist.

9. Verfahren gemäß Anspruch 8, wobei der Betrieb bereitstellt:
eine erste Verbrennungszone;
eine zweite Verbrennungszone innen zur ersten und magerer als die erste; und
eine dritte Verbrennungszone innen zur zweiten und fetter als die zweite.

10. Verfahren gemäß Anspruch 9, wobei die erste, zweite und dritte Verbrennungszone unterstöchiometrisch sind.

## Revendications

1. Appareil d'injection de combustible (26) comportant :
une pluralité d'anneaux de buses (34A ... D), les anneaux étant coaxiaux par rapport à un axe d'injection (500E), chaque buse définissant une voie de passage de gaz ayant une sortie (44) à des fins de déchargement d'un jet de mélange combustible/air (48) ; et
un moyen (46) à des fins d'introduction de combustible à de l'air pour former ledit mélange combustible/air,
un ou plusieurs groupes de buses étant orientés pour diriger les jets associés de biais par rapport à l'axe d'injection, et **caractérisé en ce que** le moyen sert à procurer une commande au moins partiellement indépendante de l'acheminement du combustible jusqu'à un premier groupe desdits un ou plusieurs groupes par rapport à d'autres parmi les buses.

2. Appareil selon la revendication 1 :
un premier groupe parmi lesdits un ou plusieurs groupes comprenant toutes les buses d'au moins un premier anneau parmi lesdits anneaux.

3. Appareil selon la revendication 1 :
un premier groupe parmi lesdits un ou plusieurs groupes comprenant toutes les buses (34A) d'au moins un anneau le plus à l'extérieur parmi lesdits anneaux.

4. Appareil selon l'une quelconque des revendications 1, 2 ou 3 :
un premier groupe parmi lesdits un ou plusieurs groupes comprenant toutes les buses (34) d'au moins un premier anneau et un second anneau parmi lesdits anneaux, lesdites buses desdits premier et second anneaux étant orientées pour diriger leurs jets associés en fonction d'un élément angulaire de signe identique autour de l'axe d'injection.

5. Appareil selon l'une quelconque des revendications précédentes, lesdits un ou plusieurs groupes comprenant un premier anneau, un second anneau, et un troisième anneau parmi les anneaux.

6. Appareil selon l'une quelconque des revendications précédentes, utilisé avec une chambre de combustion (20) de turbine à gaz.

7. Appareil selon l'une quelconque des revendications 1 à 6 :
les buses étant formées dans un corps d'injecteur commun (28).

8. Procédé de fonctionnement de l'appareil selon l'une quelconque des revendications 1 à 7 :
les buses d'un premier groupe parmi lesdits groupes fonctionnant selon un premier rapport combustible/air ;
les buses d'un second groupe parmi lesdits groupes, sensiblement à l'extérieur par rapport au premier groupe étant alimentées selon un second rapport combustible/air, supérieur au premier rapport combustible/air ; et
les buses d'un troisième groupe parmi lesdits groupes, sensiblement à l'extérieur par rapport au second groupe étant alimentées selon un troisième rapport combustible/air, inférieur au second rapport combustible/air.

9. Procédé selon la revendication 8, ledit fonctionnement procurant :
une première zone de combustion ;
une seconde zone de combustion à l'intérieur par rapport à la première et plus pauvre que la première ; et
une troisième zone de combustion à l'intérieur par rapport à la seconde et plus riche que la seconde.

10. Procédé selon la revendication 9, les première, seconde, et troisième zones de combustion étant en dessous du point stoechiométrique.
